# EUROPÄISCHE PATENTSCHRIFT

(11) **EP 2 166 239 B1**
(45) Veröffentlichungstag und Bekanntmachung des Hinweises auf die Patenterteilung: **18.04.2012**
(21) Anmeldenummer: 08016495.7
(22) Anmeldetag: 18.09.2008
(51) Int. Cl.: F16C 3/035, F16C 29/04, F16C 33/46, F16C 33/38, F16D 3/06

(54) **Wellenanordnung zur Drehmomentübertragung**
Shaft assembly for transferring torque
Agencement d'arbre destiné à la transmission de couple

(43) Veröffentlichungstag der Anmeldung: 24.03.2010
(73) Patentinhaber: Centa-Antriebe Kirschey GmbH, 42781 Haan (DE)
(72) Erfinder: Kirschey, Gerhard, 42329 Wuppertal (DE)
(74) Vertreter: Ostriga, Sonnet, Wirths & Roche

(56) Entgegenhaltungen:
- WO-A-2008/019668
- DE-A1- 19 817 290
- DE-U- 7 507 730
- DE-U1- 20 317 344
- US-A- 4 741 723
- US-A1- 2007 021 223

## Beschreibung

Die Erfindung betrifft eine Wellenanordnung zur Drehmomentübertragung, umfassend eine erste und eine zweite Welle, wobei eine der Wellen einen Hohlwellenabschnitt aufweist, innerhalb dessen ein Wellenabschnitt der anderen Welle axialverschieblich jedoch auf Drehmitnahme gelagert ist, wobei zwischen Hohlwellenabschnitt und Wellenabschnitt ein axial bewegliches Wälzlager angeordnet ist, dessen Wälzlagerelemente mittels eines Käfigs zueinander in definiertem Axialabstand gehalten sind.

Derartige Wellenanordnungen sind beispielsweise als kardanisch gelagerte Antriebswellen bei PKWs bekannt. Eine solche Antriebswelle besteht aus zwei auf Drehmitnahme gekoppelten Teilwellen, welche im Bereich eines Schiebestücks axial verschieblich gelagert sind. Das Schiebestück wird vom Hohlwellenabschnitt der ersten Teilwelle und dem darin angeordneten Wellenabschnitt der zweiten Teilwellen gebildet. Die Antriebswelle überträgt das Drehmoment beispielsweise vom Getriebe an die angetriebene PKW-Achse.

Beim Einfedern des Fahrzeugs kommt es zu einer Lageveränderung der Antriebsaggregate und folglich zu einer axialen Längenveränderung der Antriebswelle, welche durch das Schiebestück ausgeglichen wird.

Im Bereich des sogenannten Schiebestücks, also im Überlappungsbereich der zwei Teilwellen, sind die miteinander in Kontakt stehenden Flächen vorteilhafterweise reibungsminimierend gestaltet. Dies kann durch Schmierstoffe, Oberflächenbearbeitung. Materialwahl oder auch durch Wälzlager geschehen, die im gemeinsamen Überdeckungsbereich zwischen den Teilwellen angeordnet sind.

Wälzlager haben den wesentlichen Vorteil, die durch die Axialverschiebung der Teilwellen hervorgerufene Gleitreibung weitestgehend zu minimieren. Eine entsprechende Wellenanordnung ist beispielsweise aus DE 101 58 545 B4 bekannt. Hier werden umfangsversetzt mehrere Wälzlager in Form von Kugelkäfigen zwischen Hohlwellenabschnitt und Wellenabschnitt angeordnet, so dass bei Axialverschiebung kein gegenseitiges Aneinandergleiten von Oberflächen in Bereichen der Teilwellen mehr stattfindet, sondern die Teilwellen im Wesentlichen aneinander abrollen. Der Kugelkäfig ist dabei derart im Schiebestück positioniert, dass er einen maximalen Verschiebeweg ermöglicht, ohne aus dem gegenseitigen Überlappungsbereich der Teilwellen im Bereich des Schiebestücks zu gelangen.

Da in der Praxis das Wälzlager in Form des Kugelkäfigs der DE 101 58 545 B4 sich innerhalb des Schiebestücks nicht nur rollend bewegt, sondern eine minimale Ortsverlagerung durch ein Verschieben stattfindet, kommt es zum sogenannten Kriechen des Wälzlagers im Schiebestück.

Infolge des Kriechens verlässt das Wälzlager seine Neutrallage und kollidiert bei Axialverschiebung schließlich mit Bauteilbereichen, die sich an das Schiebestück anschließen. Dies führt zur Zerstörung des Wälzlagers und schließlich zur Blockierung der Axialverschiebung der Wellen im Schiebestück.

Die DE 10 2004 039 642 B3 schlägt vor, definierte Anschläge für den Kugelkäfig vorzusehen. Wenn der Kugelkäfig im Schiebestück kriecht und bei Axialverschiebung der Teilwellen keinen ausreichenden Bewegungsweg mehr zur Verfügung hat, verhindert der Anschlag zumindest eine Zerstörung des Wälzlagers. Nachteilig an dieser Lösung ist jedoch, dass die Teilwellen bei Axialbewegung dann nicht länger aneinander abrollen können. Deshalb ist die Axialbewegung beim Anschlagen der Kugelkäfige nicht länger gleitreibungsfrei, was jedoch der eigentliche Zweck des im Schiebestück angeordneten Wälzlagers ist. Durch die Gleitreibung kommt es zur Bildung von Gleitplatten an den Kugeln, wodurch das Wälzlager dauerhaft beschädigt wird.

Auch DE 102 33 758 B4 nimmt sich der Problematik des Kriechens des Wälzlagers an und schlägt vor, zusätzlich zu den Kugeln radial vorgespannte Rollkörper aus elastischem Material in dem Kugelkäfig zu lagern. Diese dienen als Bremselement und sollen eine Verschiebung des Wälzlagers, also das Kriechen, verhindern. Aufgrund ihrer Elastizität sind diese Rollen zur Drehmomentübertragung nicht geeignet. Sicher ausschließbar ist das Kriechen des Wälzlagers zwischen Hohlwelle und Wellenabschnitt in der Ausführungsform der DE 102 33 758 B4 jedoch nicht. Neben der erheblichen Verminderung der Gleitreibung übertragen die Wälzlager zusätzlich das Drehmoment von der ersten auf die zweite Teilwelle. Sie koppeln die Wellen somit auf Drehmitnahme.

Die DE 203 17 344 U1 schlägt eine Lösung für Wälzlager in teleskopierbaren Lenkwellen vor, wobei sich zwischen einem Innenstab (1) und einem Außenrohr (2) eine axial bewegliche Wälzlagereinheit (3) mit in einem Wälzlagerkäfig (4) gelagerten Wälzlagerkörpern (5) befindet, wobei im Wälzlagerkäfig mindestens ein Mitnehmer (6) gelagert ist, der formschlüssig in die Wandung des Innenstabs (1) und des Außenrohrs (2) eingreift und so das Kriechen der Wälzlagereinheit (3) verhindert. Lenkwellen sind teleskopierbar ausgestattet, um dem Benutzer eine individuelle Längenverstellung der Lenkeinheit zu ermöglichen.

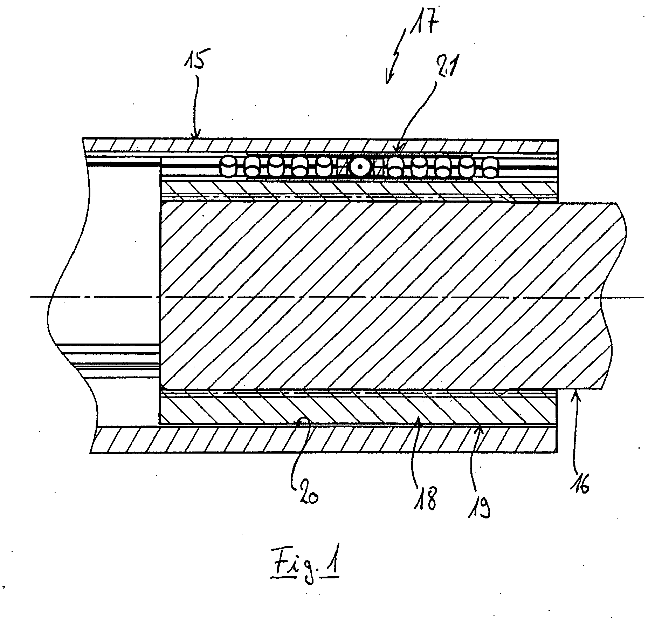

US 2007/0021223 offenbart eine Längsverschiebeeinheit zur Drehmomentübertragung in einer Antriebsanordnung. Zur Stabilisierung der Positionierung der beiden Wellenabschnitte (Profilhülse 21 und Profilzapfen 12, siehe Fig. 1-7) zueinander werden die Wälzlagerelemente (Kugeln 31) in Kugelrillen (12, 22) zwischen zwei Federn (51) gehalten. Die zusätzlich erforderlichen Federelemente (51) sind jedoch verschleißanfällig und gefährden so die Stabilität und Funktionstüchtigkeit der Antriebsanordnung.

Aufgabe der Erfindung ist es, eine Wellenanordnung zur Drehmomentübertragung in einem Fahrzeugantrieb zu schaffen, deren die Axialverschieblichkeit gewährleistenden Wälzlager keine unkontrollierte Bewegung zwischen Hohlwelle und Wellenabschnitt ausführen können, insbesondere nicht kriechen.

Gelöst wird die Aufgabe von einer Wellenanordnung mit den Merkmalen des Anspruches 1, insbesondere mit den kennzeichnenden Merkmalen, wonach das Wälzlager ein Zwangsführmittel aufweist, welches mittelbar oder unmittelbar formschlüssig in die Umfangsfläche des Wellenabschnittes und des Hohlwellenabschnitts eingreift.

Das in Hohlwelle und Wellenabschnitt eingreifende Zwangsführmittel schafft mittelbar einen Formschluss zwischen Hohlwelle und Wälzlager sowie Wälzlager und Wellenabschnitt. Dieser Formschluss gewährleistet selbstverständlich eine Axialbeweglichkeit des Wälzlagers bei Axialverschiebung von Hohlwelle und Wellenabschnitt. Er sichert jedoch auch, dass jegliche Axialbewegung des Wälzlagers unmittelbar und ausschließlich durch die Axialverschiebung von Hohlwelle und Wellenabschnitt induziert und mit dieser gekoppelt und zu dieser proportional ist. Eine Gleitreibungsbewegung des Wälzlagers zwischen Hohlwelle und Wellenabschnitt ist ausgeschlossen.

Aus fertigungstechnischen Gründen ist es von Vorteil, wenn der Wellenabschnitt von einer Welle mit einer außenumfänglich angeordneten, mit der Welle verzahnten Hülse gebildet ist.

Eine besonders bevorzugte Ausführungsform kennzeichnet sich dadurch, dass das Wälzlager einen Käfig umfasst, in welchem axial hintereinander, vorzugsweise metallene Rollen als Wälzlagerelemente gelagert sind, deren Rollenachsen in parallelen Ebenen gelagert, die Rollenachsen zweier benachbarter Rollen jedoch um 90° versetzt zueinander angeordnet sind.

Gegenüber den Wälzlagerelementen in Form von Kugeln haben Rollen den wesentlichen Vorteil, die aufgebrachten Umfangskräfte besser zu übertragen. Die aus dem Stand der Technik bekannten Kugeln neigen unter Drehmoment tendenziell dazu, in ihren Rinnen zu steigen. Dies wird nach Nutzen des notwendigen Passungsspiels durch die zweite Rinne des jeweiligen Rinnenpaares verhindert. In gewissen Oberflächenbereichen der Kugeln ist jedoch die Krafteinwirkung größer als in anderen, was eine ungleichmäßige Abnutzung zur Folge hat. Dieser konstruktive Mangel begrenzt das maximal übertragbare Drehmoment und die Lebensdauer des Wälzlagers.

Die vorgeschlagenen Rollen hingegen haben eine gerade Kontaktlinie, die auf einer planen Gegenfläche (Lauffläche) anliegt und unter Drehmoment vollkommen gleichmäßig belastet ist.

Vorzugsweise ist vorgesehen, dass die Laufflächen für die Wälzlagerelemente direkt in die Umfangsfläche von Hohlwellenabschnitt und/oder Wellenabschnitt eingearbeitet sind.

Ergänzend oder alternativ kann vorgesehen sein, dass in die Umfangsfläche von Hohlwellenabschnitt und/oder Wellenabschnitt eine Schiene eingelegt ist, die die Laufflächen für die Wälzlagerelemente ausbildet.

Weiterhin ist es denkbar, dass in die Umfangsfläche von Hohlwelle und/oder Wellenabschnitt ein gehärtetes Blech eingebettet ist, welches die Lauffläche für die Wälzlagerelemente ausbildet.

In jedem Fall ist es sinnvoll, wenn die Laufflächen aus gehärtetem Material, insbesondere aus gehärtetem Metall bestehen, um eine möglichst lange Lebensdauer der Laufflächen zu gewährleisten.

Besonders bevorzugt ist eine Ausführungsform, bei welcher in den Hohlwellenabschnitt eine Schiene eingelegt ist, die Laufflächen für die Wälzlagerelemente ausbildet und wellenabschnittsseitig die Laufflächen direkt in die Umfangsfläche eingearbeitet sind.

Bei dieser Ausführungsform kann weitestgehend mit Standardbauteilen gearbeitet werden, welche mit relativ einfachen Maßnahmen um die erfindungsgemäßen Wälzlager ergänzbar sind.

Konkret ist vorgesehen, dass das Zwangsführungsmittel ein im Käfig ortsfest angeordnetes Zahnrad ist, welches in einen gezahnten Oberflächenbereich von Hohlwellenabschnitt und/oder Wellenabschnitt eingreift, der gegebenenfalls von einer Zahnstange gebildet ist, wobei diese Ausführungsform weiterbildbar ist, indem die vorerwähnte Schiene den gezahnten Oberflächenbereich aufweist.

Die Hülse als relativ kleines und leicht bearbeitbares Bauteil kann mit notwendigen Laufflächen und gezahnten Oberflächen versehen werden. Dies ist gegenüber der direkten Bearbeitung der Welle wesentlich einfacher.

Schließlich ist eine Ausführungsform vorgesehen, bei der im Schiebestück mehrere Wälzlager umfangsversetzt um den Wellenabschnitt herum angeordnet sind, die Hohlwelle und Wellenabschnitt auf Drehmitnahme koppeln.

Eine weitere Ausführungsform kennzeichnet sich dadurch, dass, der Käfig, welcher die Wälzlagerelemente beabstandet hält, als den Wellenabschnitt umgebende Käfighülse ausgebildet ist.

Bei einer besonders bevorzugten Ausführungsform ist vorgesehen, dass das Zwangsführmittel außerhalb einer Bewegungsbahn der Wälzlagerlemente an der Käfighülse angeordnet ist.

Dabei ist konkret angedacht, dass das Zwangsführmittel umfangsbeabstandet zu den Wälzlagerelementen an der Käfighülse angeordnet ist.

Das Anordnen des Zwangsführmittels außerhalb der Bewegungsbahn der Wälzlagerelemente hat im Wesentlichen den Vorteil, dass die Dimensionierung von Zwangsführmitteln, insbesondere Zahnrad sowie den Formschluss gewährleistenden Oberflächenbereichen von Wellenabschnitt und Hohlwellenabschnitt, insbesondere die gezahnte Oberfläche bzw. die Zahnstange in weiten Bereichen frei gewählt werden kann. Insofern ist die Zwangsführung, welche von Zwangsführmittel und den Formschluss gewährleistenden Oberflächenbereichen gebildet ist, leicht an die zu erwartende Belastung angepasst werden.

Es ist durchaus denkbar, und insbesondere in Zusammenhang mit der Ausgestaltung des Käfigs als Käfighülse vorgesehen, dass die Wälzlagerlemente als Kugeln ausgebildet werden.

Der vereinfachten Fertigung wegen ist es sinnvoll, wenn die Käfighülse mehrere umfangsversetzte Gruppen von axial zueinander beabstandet angeordneten Wälziagerelementen hält.

Anstelle einer Vielzahl von einzelnen Käfigen für verschiedene Wälzlager bildet die Käfighülse das Käfigelement für eine Vielzahl von Wälzlagern aus.

Weitere Vorteile der Erfindung ergeben sich aus der nachfolgenden Beschreibung verschiedener Ausführungsbeispiele. Es zeigen:
- Fig. 1: einen Axialschnitt durch das Schiebestück einer Gelenkwelle,
- Fig. 2: einen Axialhalbschnitt durch das Schiebestück einer Gelenkwelle,
- Fig. 3: eine Ausschnittvergrößerung gemäß III in Fig. 2,
- Fig. 4: einen Radialschnitt durch das Schiebestück einer Gelenkwelle,
- Fig. 5: einen Ausschnittvergrößerung des Radialschnitts gemäß V in Fig. 4,
- Fig. 6: einen Radialschnitt durch eine Gelenkwelle, einer alternativen Ausführungsform,
- Fig. 7: eine Ausschnittsvergrößerung des Radialschnitts gemäß VII in Fig. 6,
- Fig. 8: einen Radialschnitt durch eine Gelenkwelle einer alternativen Ausführungsform,
- Fig. 9: eine Ausschnittsvergrößerung des Radialschnitts gemäß IV der Fig. 8,
- Fig. 10: einen Radialschnitt durch eine Gelenkwelle einer alternativen Ausführungsform,
- Fig. 11: eine Ausschnittsvergrößerung des Radialschnitts gemäß XI in Fig.10,
- Fig. 12: einen Radialschnitt durch eine Gelenkwelle einer alternativen Ausführungsform,
- Fig. 13: eine Ausschnittsvergrößerung des Radialschnitts gemäß XIII in Fig. 12,
- Fig. 14: eine teilweise im Axialschnitt dargestellte Gelenkwelle,
- Fig. 15: Detailansicht des Schiebestücks der Gelenkwelle in Fig. 14,
- Fig. 16: einen Radialschnitt durch eine Gelenkwelle einer alternativen Ausführungsform,
- Fig. 17: einen Radialschnitt gemäß Fig. 16 mit alternativen Wälzlagerelementen.

In den Figuren ist eine Gelenkwelle als Beispiel für die erfindungsgemäße Wellenanordnung insgesamt mit der Bezugsziffer 10 versehen.

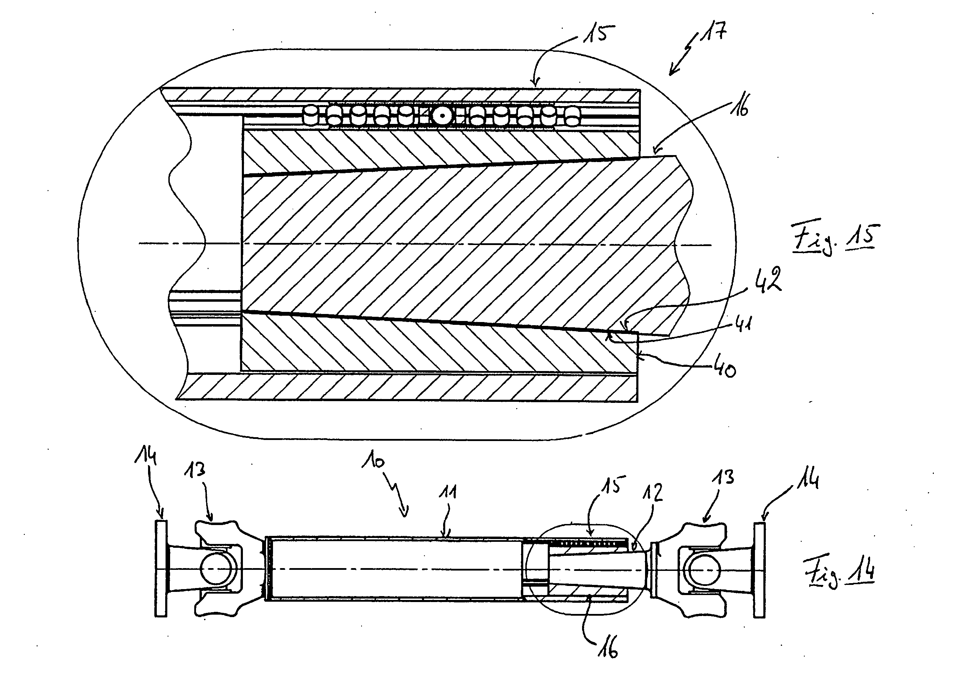

Die Gelenkwelle 10 ist in ihrer Gesamtheit in Fig. 14 dargestellt. Sie umfasst eine erste Teilwelle 11 sowie eine zweite Teilwelle 12. Jede der Teilwellen weist ein kardanisches Gelenk 13 mit je einem Befestigungsflansch 14 auf.

Die erste Teilwelle 11 ist vorliegend insgesamt als Hohlwelle ausgebildet. Innerhalb eines Hohlwellenabschnitts 15 der ersten Teilwelle 11 ist ein Wellenabschnitt 16 der zweiten Teilwelle 12 axial verschieblich angeordnet, mit der ersten Teilwelle 11 jedoch auf Drehmitnahme gekoppelt. Im Bereich der gegenseitigen Überdeckung von Hohlwellenabschnitt 15 und Wellenabschnitt 16 bildet die Gelenkwelle 10 ein sogenanntes Schiebestück oder auch eine Längsverschiebeeinheit aus. Das Schiebestück dient dazu, im Betrieb der Gelenkwelle 10 auftretende Längenveränderungen ausgleichen zu können. Diese Längenveränderungen resultieren aus Lageveränderungen der an den Befestigungsflanschen 14 angebundenen Aggregate. Durch Hinein- oder Hinausgleiten des Wellenabschnitts 16 im Hohlwellenabschnitt 15 lässt sich die Längenveränderung der Antriebswelle 10 bewerkstelligen. Der maximal mögliche Ausgleich wird durch den Bereich gegenseitiger Überdeckung von Hohlwellenabschnitt 15 und Wellenabschnitt 16 und somit durch die Länge des Schiebestücks definiert.

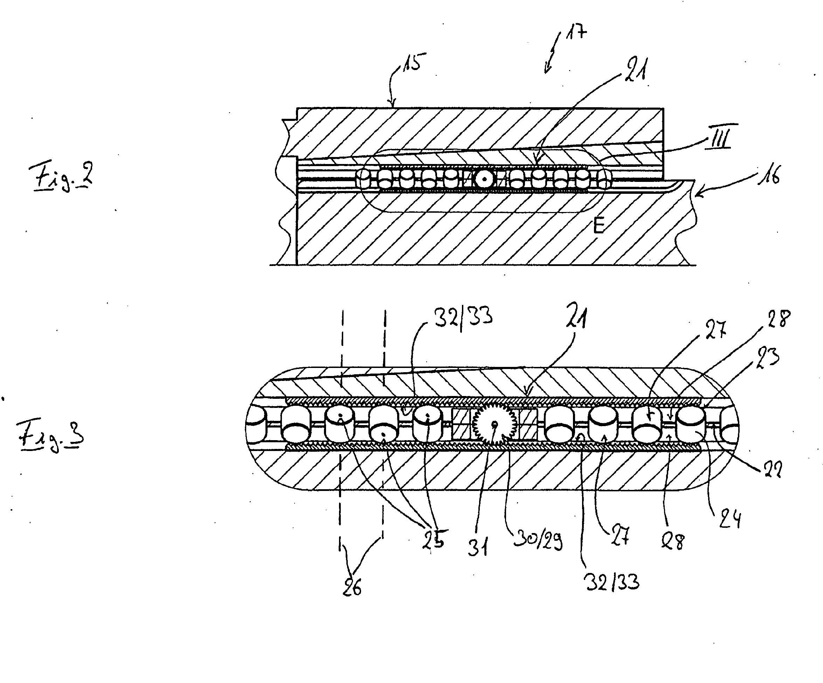

Das Schiebestück ist in seiner Gesamtheit mit der Bezugsziffer 17 versehen und in Fig. 1 im Axialschnitt dargestellt. Der Wellenabschnitt 16 ist innerhalb des Hohlwellenabschnittes 15 gelagert. Auf den Wellenabschnitt 16 ist eine Hülse 18 aufgeschoben, auf welche im späteren noch eingegangen wird. Zwischen der Außenumfangsfläche 19 der Hülse 18 und der Innenumfangsfläche 20 des Hohlwellenabschnitts 15 sind umfangsversetzt zueinander mehrere, insgesamt mit 21 bezeichnete Wälzlager angeordnet, von denen eines im Axialschnitt der Fig. 1 sowie im axialen Halbschnitt der Fig. 2 dargestellt ist.

Der Aufbau des Wälzlagers 21 wird aus der in Fig. 3 dargestellten und in Fig. 2 mit III versehenen Ausschnittsvergrößerung deutlich. Bei dem Wälzlager 21 handelt es sich um einen sogenannten Kreuzrollenkäfig, der mehrere in einem Kafigkörper 22 drehbar gelagerte Wälzlagerelemente 23 in Form von Rollen 24 umfasst. Die Drehachsen 25 der Rollen 24 liegen jeweils in Parallelebenen 26, die in Fig. 3 orthogonal zur Papierebene ausgerichtet und in Form von gestrichelten Linien dargestellt sind. Die Drehachsen 25 zweier benachbarter Rollen 24 sind jedoch zueinander um 90° versetzt und bilden so - von einer nicht dargestellten Stirnseite des Wälzlagers aus gesehen - ein Kreuz. Infolgedessen sind auch die Abrollflächen 27 hinsichtlich ihrer Berührungsbereiche mit Laufflächen 28 von Hohlwellenabschnitt 15 und Wellenabschnitt 16 um 90° zueinander versetzt.

Das Wälzlager 21 weist zudem ein Zwangsführmittel 29 - in konkreter Ausführungsform ein Zahnrad 30 - auf. Dessen Achse 31 ist ebenfalls in einer Parallelebene 26 angeordnet. Das Zahnrad 30 greift formschlüssig in gezahnte Oberflächenbereiche 32 von Hohlwellenabschnitt 15 und Wellenabschnitt 16 ein. In konkreter Ausführungsform sind die gezahnten Oberflächenbereiche als Zahnstangen 33 ausgebildet. Die gezahnten Oberflächenbereiche 32 bzw. die Zahnstangen 33 haben eine in Axialrichtung der Gelenkwelle 10 gerichtete Längenausdehnung, so dass das Wälzlager 21 zwischen Hohlwellenabschnitt 15 und Wellenabschnitt 16 axial beweglich ist. Die Zahnstangen 33 - eingelegt in passende Oberflächenausnehmungen - können aus Metall oder Kunststoff gefertigt sein.

Das Wälzlager 21 erfüllt im Schiebestück 17 der Gelenkwelle 10 zwei Funktionen. Zum einen minimiert es die Reibung bei axialer Relativverschiebung des Wellenabschnittes 16 innerhalb des Hohlwellenabschnittes 15 erheblich. Die Axialbewegung erfolgt gleitreibungsfrei. Zum zweiten koppeln die Wälzlagerelemente 21 die erste Teilwelle 11 und die zweite Teilwelle 12 auf Drehmitnahme. Die Wälzlagerelemente 21 übertragen folglich das Drehmoment von der ersten Teilwelle 11 auf die zweite Teilwelle 12 oder umgekehrt.

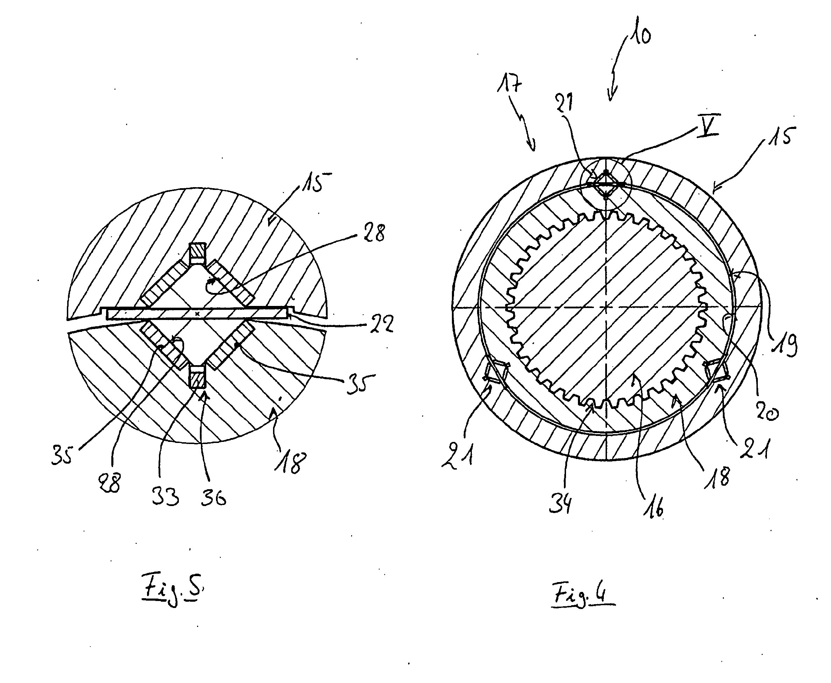

Eine Ausführungsform der erfindungsgemäßen Wellenanordnung findet sich in den Figuren 4 und 5. Der Radialschnitt durch das Schiebestück 17 der Gelenkwelle 10 zeigt zunächst den Hohlwellenabschnitt 15, den Wellenabschnitt 16 sowie die zuvor erwähnte Hülse 18. Die Hülse 18 ist auf dem Wellenabschnitt 16 mittels einer Verzahnung 34 formschlüssig angeordnet. Gleichmäßig zueinander umfangsversetzt sind zwischen der Außenumfangsfläche 19 der Hülse 18 und Innenumfangsfläche 20 des Hohlwellenabschnitts 15 drei Wälzlager 21 der vorbeschriebenen Art angeordnet. Eines der Wälzlager ist in Fig. 5 ebenfalls im Radialschnitt gezeigt. Dieser stellt die in Fig. 4 mit V bezeichnete Ausschnittsvergrößerung dar.

In den Hohlwellenabschnitt 15 wie auch in die Hülse 18 sind innen- bzw. außenumfänglich zunächst etwa dachförmige, axialgerichtete Nuten eingearbeitet, in die Bleche 35 eingelegt sind. Diese bestehen aus einem gehärteten Material, vorzugsweise Metall, und bilden die Laufflächen 28 von Hohlwellenabschnitt 15 und Wellenabschnitt 16 bzw. Hülse 18 aus. Am jeweils tiefsten Bereich der dachförmigen Nut schließt sich eine mit 36 bezeichnete im Querschnitt etwa rechteckige Zahnstangennut an, in welcher die Zahnstange 33 eingelegt ist oder direkt in die Hülse 18 oder den Hohlwellenabschnitt 15 eingearbeitet ist.

Das Verwenden einer Hülse 18, die auf den Wellenabschnitt 16 aufgesetzt und an diesem befestigt ist, hat hinsichtlich der Fertigung erhebliche Vorteile. Die notwendige Bearbeitung zur Anordnung der Bleche 35 und der Zahnstange 33 muss nicht direkt an der zweiten Teilwelle 12 erfolgen. Anstelle der Bearbeitung einer im Zweifel recht langen und daher unhandlichen Teilwelle 12 erfolgt die Bearbeitung einer leicht handhabbaren Hülse 18. Insbesondere dann, wenn die Laufflächen 28 nicht durch Einsetzen von beispielsweise Blechen, sondern direkt vom Wellenmaterial aus gebildet werden sollen, erlaubt es die Verwendung einer Hülse 18 auch ein für die Laufflächen 28 und/oder den gezahnten Oberflächenbereich 32 geeignetes Ausgangsmaterial zu wählen.

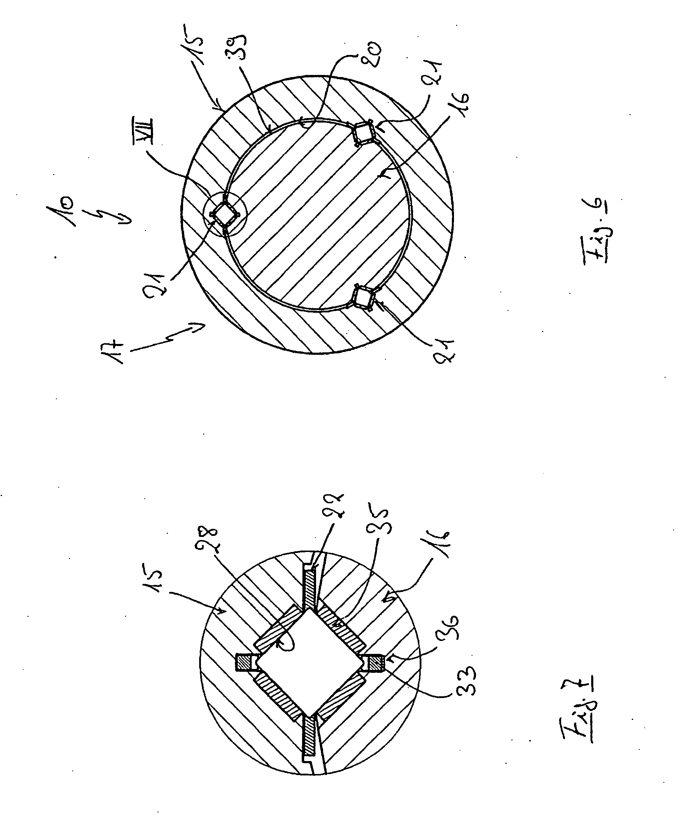

Die Figuren 6 und 7 zeigen eine prinzipiell mit den Figuren 4 und 5 identische Ausführungsform der erfindungsgemäßen Wellenanordnung. Hier wurde auf die mit der Welle 16 Verzahnte Hülse 18 verzichtet, so dass die notwendige Bearbeitung zum Einbringen von Blechen 35 und Zahnstange 33 direkt auf dem Außenumfang 39 der Welle 16 stattfindet.

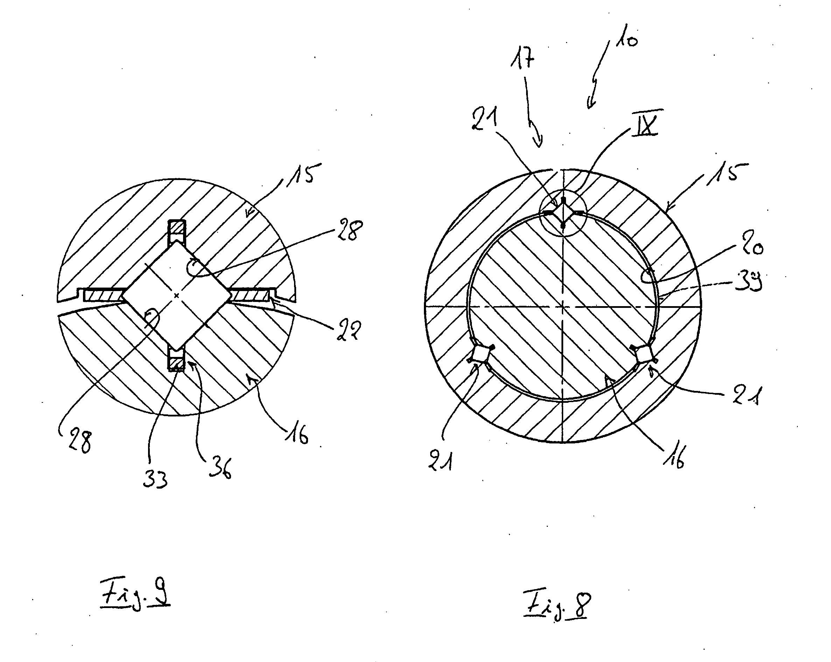

Die Figuren 8 und 9 bilden die in den Figuren 6 und 7 dargestellte Ausführungsform weiter. Im Unterschied zur dortigen Darstellung wurde auf die Bleche 35 zur Ausbildung geeigneter Laufflächen 28 verzichtet. Stattdessen bilden Außenumfangsfläche 39 des Wellenabschnittes 16 bzw. der Innenumfangsfläche 20 des Hohlwellenabschnittes die Laufflächen 28 für die nicht dargestellten Rollen 24 direkt aus. Hierzu wurden die entsprechenden Flächenbereiche nach Einarbeitung der dachförmigen Nuten durch geeignete Verfahren gehärtet, um der Belastung unter Drehmoment standzuhalten.

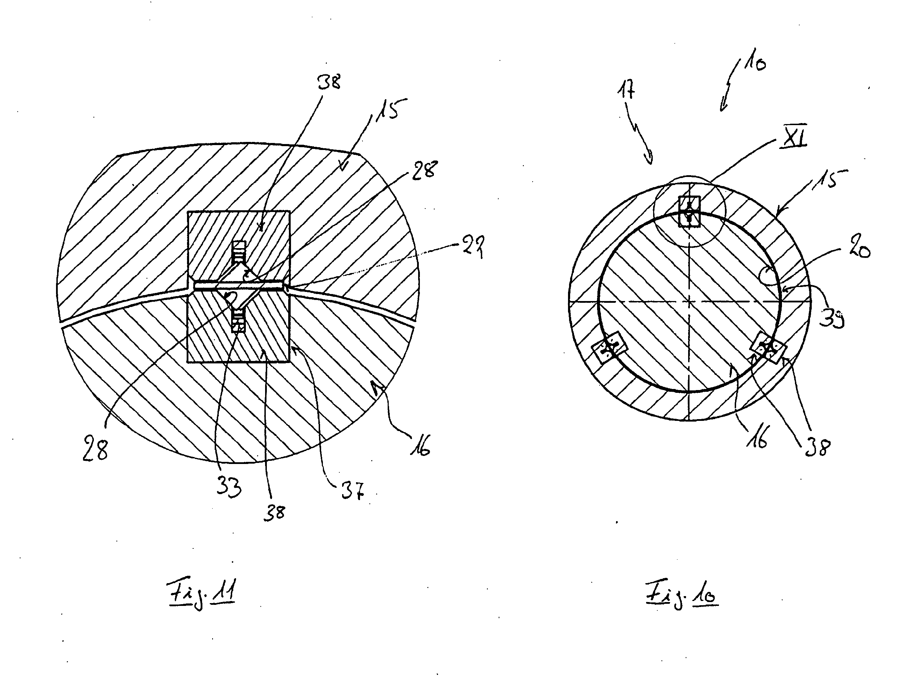

Eine weitere Ausführungsform der Wellenanordnung ist in den Figuren 10 und 11 dargestellt. Diese unterscheidet sich gegenüber den bisherigen Ausführungsformen wiederum nur in der Art und Weise, in welcher Hohlwellenabschnitt 15 und Welle 16 mit den notwendigen Laufflächen und Zahnstangen für die Wälzlagerelemente 21 versehen werden. Im vorliegenden Falle werden in den Außenumfangsfläche 39 des Wellenabschnittes 16 und in die Innenumfangsfläche 20 des Hohlwellenabschnittes 15 in etwa rechteckige Nuten 37 eingearbeitet. In diese werden Schienen 38 eingelegt und mit geeigneten Mitteln befestigt. Diese Schienen 38 weisen sowohl die erforderlichen gezahnten Oberflächen 32 bzw. Zahnstangen 33, wie auch die Laufflächen 28 auf. Diese Ausführungsform hat den wesentlichen Vorteil, dass die Schienen 38 als Standardbauteile herstellbar sind und eine standardisierte Bearbeitung von Hohlwellenabschnitt 15 und Wellenabschnitt 16 erfolgen kann. Dies hat fertigungstechnisch erhebliche Vorteile.

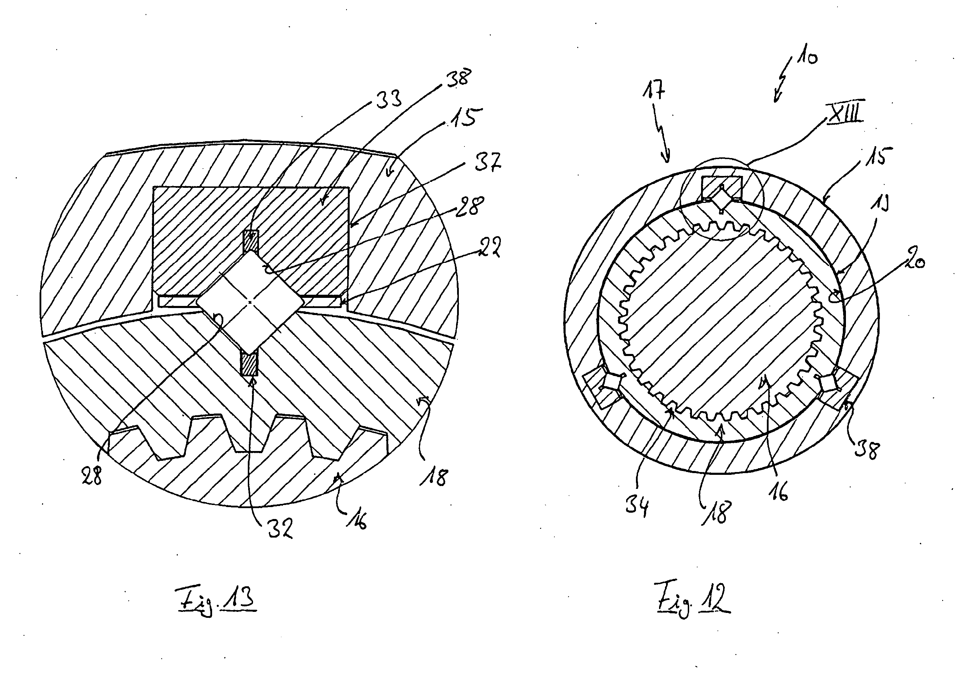

Selbstverständlich sind verschiedene Mischformen der vorgenannten Ausführungsbeispiele denkbar. Insbesondere können die Laufflächen 28 und die gezahnten Oberflächenbereiche 33 von Hohlwellenabschnitt 15 und Wellenabschnitt 16 durch unterschiedliche Mittel ausgebildet sein. Ein Beispiel hierfür ist das Ausführungsbeispiel der Figuren 12 und 13. Hier ist der Wellenabschnitt 16 gemäß der eingangs dargestellten Ausführungsform der Figuren 4 und 5 ausgebildet. Der Wellenabschnitt 16 ist insbesondere mit einer mittels einer Verzahnung 34 verbundenen außenumfänglich aufgeschobenen Hülse 18 versehen. Entsprechend der Ausführungsform der Figuren 10 und 11 bildet der Hohlwellenabschnitt 15 seine Laufflächen 28 mittels einer Schiene 38 aus, die innerhalb einer Nut 37 der Innenumfangsfläche 20 angeordnet ist. Die Schiene 38 ist mit der Zahnstange 33 versehen. Weist die Hülse 18 in der Ausführungsform der Figuren 4 und 5 Laufflächen 28 auf, die durch speziell gehärtete Bleche 35 gebildet werden, bildet vorliegend die Außenumfangsfläche 19 der Hülse die Laufflächen 28 direkt aus, indem die entsprechenden Flächenbereiche durch ein geeignetes Verfahren gehärtet wurden. Anstelle einer Zahnstange 33 wurde ein gezahnter Oberflächenbereich 32 geschaffen.

Beliebige andere Kombinationen der Ausbildung der Laufflächen 28 und der Anordnung von Zahnstange 33 bzw. der Ausbildung von gezahnten Oberflächenbereichen 32 sind denkbar.

Nun sei das Augenmerk nochmals auf Fig. 15 gelegt. Die dortige Ausschnittsvergrößerung zeigt ein Schiebestück 17, dessen Wellenabschnitt 16 konisch ausgebildet ist. Auf diesem Wellenabschnitt 16 ist eine Hülse 40 aufgepresst, die innenumfänglich eine entsprechende Gegenkonizität aufweist. Hierbei kann es sich um einen klassischen Längspressverband handeln, bei welchem die Hülse 40 mit entsprechend hoher Axialkraft auf den Wellenabschnitt 16 aufgepresst wird.

Bei einer außerordentlich bevorzugten Ausführungsform handelt es sich jedoch um einen Ölpressverband. Hier wird beim Fügen von Hülse 40 und Wellenabschnitt 16 durch nicht dargestellte Kanäle Öl zwischen die Außenumfangsfläche 41 des Wellenabschnitts 16 und die Innenumfangsflläche 42 in der Hülse 40 gepresst. Hierdurch wird für den Fügevorgang die Reibung zwischen Hülse 40 und Wellenabschnitt 16 stark vermindert. So wird es möglich, den Fügevorgang kontrolliert durchzuführen und die Hülse derart aufzuweiten, dass das Passungsspiel zwischen Hülse 40 und Hohlwellenabschnitt 15 auf das absolut notwendige Maß reduziert wird. So lässt sich indirekt das Passungsspiel zwischen den Wälzlagerelementen 23 und den Laufflächen 28 regulieren.

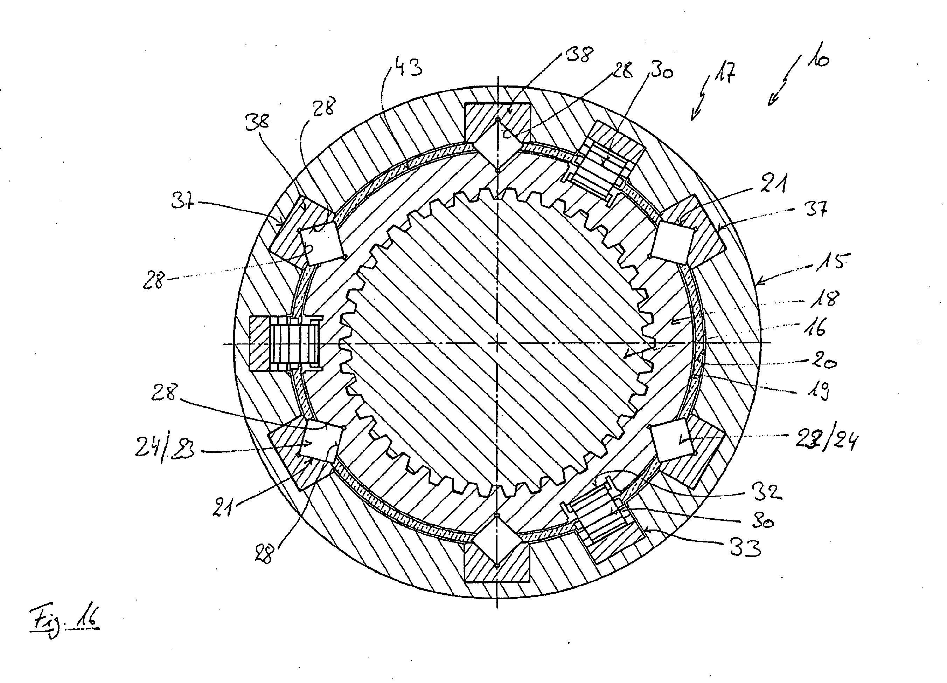

Fig. 16 zeigt eine weitere alternative Ausführungsform der Erfindung. Das im Radialschnitt dargestellte Schiebestück 17 einer Gelenkwelle 10 umfasst wiederum einen Hohlwellenabschnitt 15 und einen Wellenabschnitt 16, auf welchem außen umfänglich eine verzahnte Hülse 18 angeordnet ist. Zwischen der Innenumfangsfläche 20 des Hohlwellenabschnitts 15 und der Außenumfangsfläche 19 der Hülse 18 sind umfangsbeabstandet mehrere Wälzlager 21 angeordnet. In die Innenumfangsfläche 20 des Hohlwellenabschnittes 15 sind axial Nuten 37 eingearbeitet, in welche Schienen 38 mit Laufflächen 28 eingesetzt sind. Die hülsenseitigen Laufflächen 28 werden von der Hülse 18 selbst gebildet.

Anstelle mehrerer umfangsversetzt angeordneter Käfigkörper 22, welche die Wälzlagerelemente 23 - hier in Form von Rollen 24 - halten, ist zwischen Hohlwellenabschnitt 15 und Wellenabschnitt 16 eine Käfighülse 43 angeordnet. Diese hält mehrere umfänglich beabstandete Gruppen axial hintereinander angeordneter Wälzlagerelemente 23. Es ist durchaus denkbar, dass die Zwangsführmittel 29 in Form von Zahnrädern 30, wie bei den vorherigen Ausführungsformen im Bereich der Bewegungsbahn, an den Wälzlagerelementen 23 angeordnet sind, insbesondere zwischen den axial voneinander beabstandeten Rollen 24. Bei der Ausführungsform der Fig. 16, welches eine besonders bevorzugte Ausführungsform ist, sind die Zahnräder 30 außerhalb der Bewegungsbahn der Wälzlagerelemente 23, insbesondere umfangsversetzt zu diesen angeordnet. Ebenso verhält es sich mit den Zahnstangen 33 bzw. den gezahnten Oberflächenbereichen 33, die in der Bewegungsbahn der Zahnräder 30 angeordnet sind. Ein weiterer wesentlicher Vorteil ist, dass die Anzahl der Zwangsführungen - bestehend aus Zwangsführmittel 32 und geeigneter Oberfläche seitens Hohlwellenabschnitt 15 und Wellenabschnitt 16 - nicht von der Anzahl der Wälzlager 21 abhängig ist. Insbesondere können weniger Zwangsführungen als Wälzlager 21 vorgesehen sein, was die Produktionskosten senkt.

Diese Ausführungsform hat den wesentlichen Vorteil, dass die Dimensionierung der Zahnstangen 33 und der Zahnräder 30 unabhängig von der Dimension der Wälzlagerelemente ist und deshalb besser an die zu erwartenden Belastungen anpassbar sind. Anstelle gezahnter Oberflächenbereiche 32 und Zahnstangen 33 lassen sich auch in Nuten eingelegte Ketten verwenden. Diese bilden dann mit einem Kettenrad als Zwangsführmittel 29 eine Zwangsführung für die Wälzlager 21 aus.

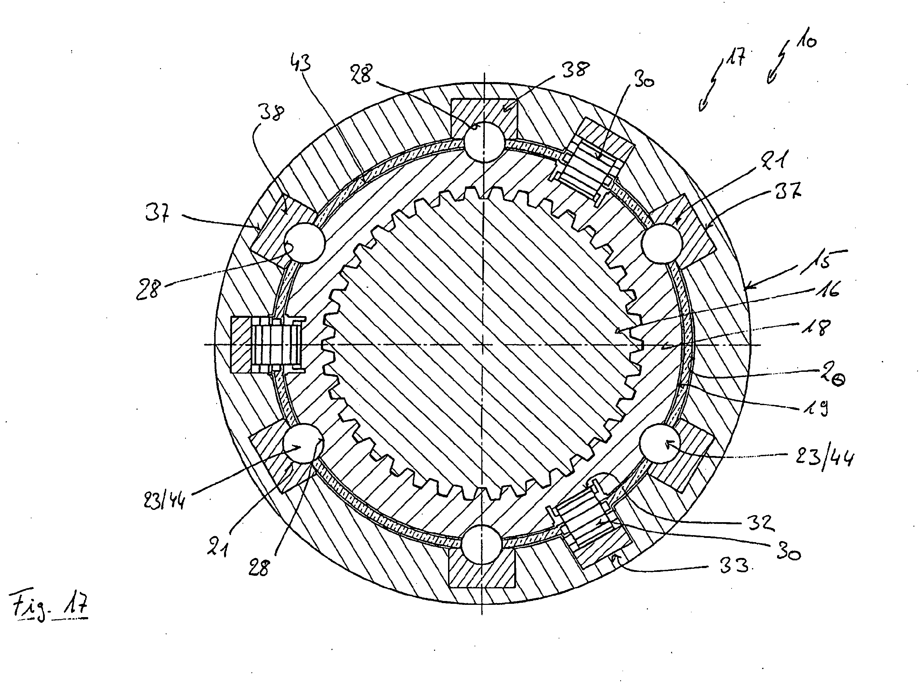

Die Ausführungsform der Fig. 17 entspricht im Wesentlichen der Fig. 16. Die Wälzlagerelemente 23 sind hier jedoch als Kugeln 44 ausgebildet.

### Bezugszeichenliste:

- 10: Gelenkwelle
- 11: erste Teilwelle
- 12: zweite Teilwelle
- 13: kardanisches Gelenk
- 14: Befestigungsflansch
- 15: Hohlwellenabschnitt
- 16: Wellenabschnitt
- 17: Schiebestück
- 18: Hülse
- 19: Außenumfangsfläche v. 18
- 20: Innenumfangsfläche v. 15
- 21: Wälzlager
- 22: Käfigkörper
- 23: Wälzlagerelelemente
- 24: Rollen
- 25: Drehachsen
- 26: Parallelebenen
- 27: Abrollflächen v. 24
- 28: Laufflächen
- 29: Zwangsführmittel
- 30: Zahnrad
- 31: Achse v. 30
- 32: gezahnte Oberflächenbereiche
- 33: Zahnstangen
- 34: Verzahnung
- 35: Bleche
- 36: Zahnstangennut
- 37: Nuten
- 38: Schienen
- 39: Außenumfangsfläche v. 16
- 40: Hülse
- 41: Außenumfangsfläche von 16
- 42: Innenumfangsfläche von 40
- 43: Käfighülse
- 44: Kugel

## Patentansprüche

1. Wellenanordnung (10) zur Drehmomentübertragung, umfassend eine erste und eine zweite Welle (11, 12), wobei eine der Wellen (11, 12) einen Hohlwellenabschnitt (15) aufweist, innerhalb dessen ein Wellenabschnitt (16) der anderen Welle (11, 12) axialverschieblich jedoch auf Drehmitnahme gelagert ist, wobei zwischen Hohlwellenabschnitt (15) und Wellenabschnitt (16) ein axial bewegliches Wälzlager (21) angeordnet ist, dessen Wälzlagerelemente (23) mittels eines Käfigs (22) zueinander in definiertem Axialabstand gehalten sind, **dadurch gekennzeichnet, dass** der Wellenabschnitt (16) von einer Welle mit einer außenumfänglich angeordneten, mit der Welle verzahnten Hülse (18) gebildet ist und der Käfig des Wälzlagers (21) ein Zwangsführmittel (29) aufweist, welches mittelbar oder unmittelbar formschlüssig in die Umfangsfläche (19, 20) der Hülse (18) des Wellenabschnittes (16) und des Hohlwellenabschnitts (15) eingreift.

2. Wellenanordnung gemäß Anspruch 1, **dadurch gekennzeichnet, dass** das Wälzlager (21) einen Käfig (22) umfasst, in welchem axial hintereinander Rollen (24) als Wälzlagerelemente (23) gelagert sind, deren Rollenachsen (25) in parallelen Ebenen (26) gelagert, die Rollenachsen (25) zweier benachbarter Rollen (24) jedoch um 90° versetzt zueinander angeordnet sind.

3. Wellenanordnung gemäß Anspruch 1 oder 2, **dadurch gekennzeichnet, dass** die Laufflächen (28) für die Wälzlagerelemente (23) direkt in die Umfangsfläche (19, 39, 20) von Hohlwellenabschnitt (15) und/oder Wellenabschnitt (16) eingearbeitet sind.

4. Wellenanordnung gemäß Anspruch 1 oder 2, **dadurch gekennzeichnet, dass** in die Umfangsfläche (19, 39, 20) von Hohlwellenabschnitt (15) und/oder Wellenabschnitt (16) eine Schiene (38) eingelegt ist, die die Laufflächen (28) für die Wälzlagerelemente (23) ausbildet.

5. Wellenanordnung gemäß Anspruch 1 oder 2, **dadurch gekennzeichnet, dass** in die Umfangsfläche (19, 39, 20) von Hohlwellenabschnitt (15) und/oder Wellenabschnitt (16) ein Blech (35) eingebettet ist, welches die Lauffläche (28) für die Wälzlagerelemente (23) ausbildet.

6. Wellenanordnung nach einem der Ansprüche 3 bis 5, **dadurch gekennzeichnet, dass** die Laufflächen (28) aus gehärtetem Material, insbesondere aus gehärtetem Metall bestehen.

7. Wellenanordnung nach Anspruch 3 und 4, **dadurch gekennzeichnet, dass** in den Hohlwellenabschnitt (15) eine Schiene (38) eingelegt ist, die Laufflächen (28) für die Wälzlagerelemente (23) ausbildet und wellenabschnittsseitig die Laufflächen (28) direkt in die Umfangsfläche (19, 39) eingearbeitet sind.

8. Wellenanordnung gemäß einem der vorhergehenden Ansprüche, **dadurch gekennzeichnet, dass** das Zwangsführungsmittel (29) ein im Käfig (22) ortsfest angeordnetes Zahnrad (30) ist, welches in einen gezahnten Oberflächenbereich (32) von Hohlwellenabschnitt (15) und/oder Wellenabschnitt (16) eingreift, der gegebenenfalls von einer Zahnstange (33) gebildet ist.

9. Wellenanordnung nach Anspruch 4 und 8, **dadurch gekennzeichnet, dass** die Schiene (38) den gezahnten Oberflächenbereich (32) aufweist.

10. Wellenanordnung nach einem der vorhergehenden Ansprüche, **dadurch gekennzeichnet, dass** mehrere Wälzlager (21) umfangsversetzt um den Wellenabschnitt (16) herum angeordnet sind, die den Hohlwellenabschnitt (15) und Wellenabschnitt (16) auf Drehmitnahme koppeln.

11. Wellenanordnung nach einem der vorhergehenden Ansprüche, **dadurch gekennzeichnet, dass** der Käfig (22), welcher die Wälzlagerelemente (23) zueinander beabstandet hält, als den Wellenabschnitt (16) umgebende Käfighülse (43) ausgebildet ist.

12. Wellenanordnung nach Anspruch 11, **dadurch gekennzeichnet, dass** das Zwangsführmittel (29) außerhalb einer Bewegungsbahn der Wälzlagerelemente (23) an der Käfighülse (43) angeordnet ist.

13. Wellenanordnung nach Anspruch 11, **dadurch gekennzeichnet, dass** das Zwangsführmittel (29) umfangsbeabstandet zu den Wälzlagerelementen (23) an der Käfighülse (43) angeordnet ist.

14. Wellenanordnung nach Anspruch 1, **dadurch gekennzeichnet, dass** die Wälzlagerelemente (23) als Kugeln (44) ausgebildet sind.

15. Wellenanordnung nach Anspruch 11, **dadurch gekennzeichnet, dass** die Käfighülse (43) mehrere umfangsversetzte Gruppen von axial zueinander beabstandet angeordneten Wälzlagerelementen (23) hält.

16. Wellenanordnung nach einem der Ansprüche 12 bis 15, **dadurch gekennzeichnet, dass** die Anzahl der formschlüssig in die Umfangsfläche (19, 39, 20) des Wellenabschnitts (16) und des Hohlwellenabschnitts (15) eingreifenden Zwangsführmittel (29) zu der Anzahl der Wälzlager (21) differiert, wobei die Anzahl der Zwangsführmittel (21) insbesondere geringer ist.

## Claims

1. A shaft assembly (10) for transferring torque, comprising a first and a second shaft (11, 12), wherein one of the shafts (11, 12) has a hollow shaft portion (15) within which a shaft portion (16) of the other shaft (11, 12) is mounted in axially displaceable but rotationally entrained manner, wherein an axially movable roller bearing (21) is arranged between the hollow shaft portion (15) and the shaft portion (16), the roller bearing elements (23) of said roller bearing being held at a defined axial spacing from one another by means of a cage (22), **characterised in that** the shaft portion (16) of a shaft is formed with a sleeve (18) which is arranged around the outer circumference and is interlocked with the shaft, and the cage of the roller bearing (21) has a positive guide means (29) which engages with indirect or direct form fit in the circumferential face (19, 20) of the sleeve (18) of the shaft portion (16) and the hollow shaft portion (15).

2. A shaft assembly according to Claim 1, **characterised in that** the roller bearing (21) comprises a cage (22) in which rollers (24) are arranged in axial succession as roller bearing elements (23) whereof the roller axes (25) are arranged in parallel planes (26) but with the roller axes (25) of two adjacent rollers (24) arranged mutually offset through 90°.

3. A shaft assembly according to Claim 1 or 2, **characterised in that** the running faces (28) for the roller bearing elements (23) are incorporated directly in the circumferential face (19, 39, 20) of the hollow shaft portion (15) and/or the shaft portion (16).

4. A shaft assembly according to Claim 1 or 2, **characterised in that** a rail (38) which forms the running faces (28) for the roller bearing elements (23) is arranged in the circumferential face (19, 39, 20) of the hollow shaft portion (15) and/or shaft portion (16).

5. A shaft assembly according to Claim 1 or 2, **characterised in that** a plate (35) which forms the running face (28) for the roller bearing elements (23) is embedded in the circumferential face (19, 39, 20) of the hollow shaft portion (15) and/or shaft portion (16).

6. A shaft assembly according to one of Claims 3 to 5, **characterised in that** the running faces (28) are made of hardened material, in particular hardened metal.

7. A shaft assembly according to Claims 3 and 4, **characterised in that** a rail (38) which forms running faces (28) for the roller bearing elements (23) is arranged in the hollow shaft portion (15) and, on the shaft-portion side, the running faces (28) are incorporated directly in the circumferential face (19, 39).

8. A shaft assembly according to one of the preceding claims, **characterised in that** the positive guide means (29) is a toothed wheel (30) which is arranged in fixed manner in the cage (22) and engages in a toothed surface region (32) of the hollow shaft portion (15) and/or shaft portion (16) which may be formed by a toothed rack (33).

9. A shaft assembly according to Claims 4 and 8, **characterised in that** the rail (38) has the toothed surface region (32).

10. A shaft assembly according to one of the preceding claims, **characterised in that** a plurality of roller bearings (21) are arranged circumferentially offset about the shaft portion (16) and couple the hollow shaft portion (15) and the shaft portion (16) in rotationally entrained manner.

11. A shaft assembly according to one of the preceding claims, **characterised in that** the cage (22) which holds the roller bearing elements (23) at a spacing from one another is constructed as a cage sleeve (43) surrounding the shaft portion (16).

12. A shaft assembly according to Claim 11, **characterised in that** the positive guide means (29) is arranged outside a movement path of the roller bearing elements (23) on the cage sleeve (43).

13. A shaft assembly according to Claim 11, **characterised in that** the positive guide means (29) is arranged at a circumferential spacing from the roller bearing elements (23) on the cage sleeve (43).

14. A shaft assembly according to Claim 1, **characterised in that** the roller bearing elements (23) are constructed as balls (44).

15. A shaft assembly according to Claim 11, **characterised in that** the cage sleeve (43) holds a plurality of circumferentially offset groups of mutually axially spaced roller bearing elements (23).

16. A shaft assembly according to one of Claims 12 to 15, **characterised in that** the number of positive guide means (29) engaging with form fit in the circumferential face (19, 39, 20) of the shaft portion (16) and the hollow shaft portion (15) differs from the number of roller bearings (21), the number of positive guide means (21) in particular being smaller.

## Revendications

1. Agencement d'arbre (10) pour la transmission de couple, comprenant un premier et un deuxième arbres (11, 12), un des arbres (11, 12) présentant une section d'arbre creux (15) à l'intérieur de laquelle une section d'arbre (16) de l'autre arbre (11, 12) est cependant placée en déplacement axial sur un entraînement en rotation, un palier à rouleaux (21) mobile axialement, dont les éléments du palier à rouleaux (23) sont maintenus à l'aide d'une cage (22) les uns par rapport aux autres à une distance axiale définie, étant disposé entre la section d'arbre creux (15) et la section d'arbre (16), **caractérisé en ce que** la section d'arbre (16) est formée d'un arbre avec une douille (18), engrainée avec l'arbre, disposée périphériquement extérieurement et **en ce que** la cage du palier à rouleaux (21) présente un moyen de guidage par contrainte (29), lequel engraine directement ou indirectement par correspondance de forme dans la surface circonférencielle (19, 20) de la douille (18) de la section d'arbre (16) et de la section d'arbre creux (15).

2. Agencement d'arbre selon la revendication 1, **caractérisé en ce que** le palier à rouleaux (21) comprend une cage (22) dans laquelle sont logés des rouleaux (24) placés les uns derrières les autres axialement, en tant qu'éléments du palier à rouleaux (23), dont les axes de rouleau (25) sont situés dans des plans parallèles (26), les axes de rouleau (25) de deux rouleaux (24) contigus étant cependant disposés décalés les uns par rapport aux autres de 90°.

3. Agencement d'arbre selon la revendication 1 ou 2, **caractérisé en ce que** les surfaces de roulement (28) pour les éléments du palier à rouleaux (23) sont incorporées directement dans la surface circonférencielle (19, 39, 20) de la section d'arbre creux (15) et/ou de la section d'arbre (16).

4. Agencement d'arbre selon la revendication 1 ou 2, **caractérisé en ce que** dans la surface circonférencielle (19, 39, 20) de la section d'arbre creux (15) et/ou de la section d'arbre (16), un rail (38), qui forme les surfaces de roulement (28) pour les éléments du palier à rouleaux (23), est incorporé.

5. Agencement d'arbre selon la revendication 1 ou 2, **caractérisé en ce que** dans la surface circonférencielle (19, 39, 20) de la section d'arbre creux (15) et/ou de la section d'arbre (16), une tôle (35) est incorporée, laquelle forme la surface de roulement (28) pour les éléments du palier à rouleaux (23).

6. Agencement d'arbre selon l'une des revendications 3 à 5, **caractérisé en ce que** les surfaces de roulement (28) sont en matériau trempé, en particulier en métal trempé.

7. Agencement d'arbre selon la revendication 3 et 4, **caractérisé en ce que** dans la section d'arbre creux (15), un rail (38) qui forme les surfaces de roulement (28) pour les éléments du palier à rouleaux (23), est incorporé et **en ce que**, côté section d'arbre, les surfaces de roulement (28) sont incorporées directement dans la surface circonférencielle (19, 39).

8. Agencement d'arbre selon l'une des précédentes revendications, **caractérisé en ce que** le moyen de guidage par contrainte (29) est une roue dentée (30) disposée de manière fixe dans la cage (22) et qui est en prise dans une zone de surface dentée (32) de la section d'arbre creux (15) et/ou de la section d'arbre (16) qui est, le cas échéant, formée par une crémaillère (33).

9. Agencement d'arbre selon la revendication 4 et 8, **caractérisé en ce que** le rail (38) présente la zone de surface dentée (32).

10. Agencement d'arbre selon l'une des précédentes revendications, **caractérisé en ce que** plusieurs paliers à rouleaux (21) qui couplent la section d'arbre creux (15) et la section d'arbre (16) sur l'entraînement en rotation, sont disposés, de manière décalée, sur la périphérie, autour de la section d'arbre (16).

11. Agencement d'arbre selon l'une des précédentes revendications, **caractérisé en ce que** la cage (22) qui tient les éléments du palier à rouleaux (23) espacés les uns par rapport aux autres, est conçue en tant que douille de cage (43) entourant la section d'arbre (16).

12. Agencement d'arbre selon la revendication 11, **caractérisé en ce que** le moyen de guidage par contrainte (29) est disposé à l'extérieur d'une trajectoire des éléments du palier à rouleaux (23) au niveau de la douille de cage (43).

13. Agencement d'arbre selon la revendication 11, **caractérisé en ce que** le moyen de guidage par contrainte (29) est disposé espacé circonférenciellement par rapport aux éléments du palier à rouleaux (23) au niveau de la douille de cage (43).

14. Agencement d'arbre selon la revendication 11, **caractérisé en ce que** les éléments du palier à rouleaux (23) sont conçus en tant que billes (44).

15. Agencement d'arbre selon la revendication 11, **caractérisé en ce que** la douille de cage (43) tient plusieurs groupes décalés circonférenciellement d'éléments de palier de rouleaux (23) espacés axialement les uns des autres.

16. Agencement d'arbre selon l'une des revendications 12 à 15, **caractérisé en ce que** le nombre de moyens de guidage par contrainte (29) s'engrenant, par correspondance de forme, dans la surface circonférencielle (19, 39, 20) de la section d'arbre (16) et de la section d'arbre creux (15) diffère du nombre de paliers à rouleaux (21), le nombre de moyens de guidage par contrainte (21) étant en particulier moindre.
